# EUROPEAN PATENT SPECIFICATION

(11) **EP 3 303 824 B1**
(45) Date of publication and mention of the grant of the patent: **12.02.2020**
(21) Application number: 16800365.5
(22) Date of filing: 25.05.2016
(51) Int. Cl.: F03B 3/12, F04D 29/22, F04D 29/34

(54) **RUNNER FOR A FLUID MACHINE HAVING REMOVABLE BLADES**
LAUFRAD FÜR EINE STRÖMUNGSMASCHINE MIT ABNEHMBAREN SCHAUFELN
ROUE MOBILE DESTINÉE À MACHINE À FLUIDE DOTÉE DE PALES AMOVIBLES

(30) Priority: 28.05.2015 NO 20150679
(43) Date of publication of application: 11.04.2018
(73) Proprietor: Dynavec AS, 7038 Trondheim (NO)
(72) Inventor: STORVOLD, Jahn Peter, 7032 Trondheim (NO)
(74) Representative: Håmsø Patentbyrå AS
(86) International application number: PCT/NO2016/050105
(87) International publication number: WO 2016/190749

(56) References cited:
- WO-A1-2007/037699
- WO-A1-2014/038950
- WO-A2-2009/072892
- FR-A- 1 261 800
- FR-A1- 2 639 398
- FR-A1- 3 005 328
- US-A- 6 016 600
- US-B1- 6 402 467

## Description

There is provided a runner for a fluid machine. More precisely there is provided a runner for a fluid machine where the runner includes a runner hub and one or more curved blades, and where the blade is removably fixed to the runner hub by fixing elements that extend into a double curved first socket portion of the blade.

Runners for fluid machines are produced in many different forms and a diameter of up to three meters is foreseeable. One form of runner includes a runner hub and a number of blades spaced about the centre axis of the runner. Often the runner also includes a runner ring.

Runners have traditionally been produced as casted or welded-up structures that are subsequently prepared by grinding and machining. Increased efficiency and maintenance requirements have led to other production methods.

Norwegian patent 327520 discloses a runner of the type mentioned above but where a socket portion of removable blades fits in respective slots in the runner hub. The slots mainly follow the curvature of the blade. Both runner hub, blades and runner ring, if present are machined to a near finished state prior to assembly.

In order to achieve the required efficiency of the runner, blades of this kind has a relatively complicated, double curved form. Thus, the surface area between the blade and the bottom of the slot also has a double curved form. As each blade bears on most of the surface area, said double curved surface areas require a geometry having relatively close tolerances. It is self-evident that machining and necessary inspection work is time consuming and relatively costly for those relatively large double curved areas.

Other prior art documents disclosing relevant background technology are:
- US 6402467 B1;
- NO 334127 B;
- NO 334130 B; and
- US 2008232967 A

FR 3005328 A1, US 6016600 A, and FR 2639398 A1 disclose relevant background technology in the form of Kaplan-type turbines.

The invention has for its object to remedy or to reduce at least one of the drawbacks of the prior art, or at least provide a useful alternative to prior art.

The object is achieved through features, which are specified in the description below and in the claims that follow.

According to the invention, the contact between the double curved surface areas is replaced by a number of contact surfaces that are plane. The contact surfaces may be positioned at opposite sides or surrounding a fixing element that fixes the blade to the runner hub or runner ring. A contact body is positioned between the adjacent contact surfaces of the blade and the runner hub, alternatively the runner ring.

The invention is defined by the independent patent claims. The dependent claims define advantageous embodiments of the invention.

More specifically, the invention relates to a runner for a fluid machine where the runner includes a runner hub and a ring and one or more curved blades, and where the blade is removably fixed to the runner hub and to the ring by fixing elements that extend into a double curved first socket portion of the blade, wherein the first socket portion bears against the runner hub and the ring at one or more localized contact surfaces that are plane, and wherein a contact body, which may be a separate body or form a part of the runner hub and ring or blade, is positioned between one or more contact surfaces in the runner hub and the blade and between one or more contact surfaces in the ring and blade.

The contact body may typically be made from a metal, such as steel, and various geometrical shapes of the contact bodies are disclosed in the following. Other hard and substantially incompressible materials may also be used.

By introducing a number of plane contact surfaces, the surface areas of the runner hub and the blade become spaced apart. An accurately matching profile between them is no longer necessary.

The contact body is positioned between adjacent contact surfaces of the runner hub and the blade, and also between adjacent contact surfaces of a runner ring and the blade. The contact body may be a separate body or form a part of the runner hub, runner ring or the blade.

The contact surfaces, at least in the runner hub, runner ring or the blade, may be recessed. Thus, the plane contact surfaces may be machined to the correct depth through the surface areas of said items.

The length axis of the contact body may be parallel to the length axis of the fixing element. The contact surface is preferably perpendicular to the length axis of the contact body. In this way, the load capacity of the fixing element is optimally utilized and side movement of the blade during make-up avoided.

At least one of the socket portions may have a width that is wider than a thickness of the intermediate portion of the blade. The stability of the blade relative the runner hub and runner ring is thus increased.

The contact body may have any practical form that includes cylindrical form, ring form, disc form or elongated form or the contact body may be formed from a combination of two or more of these forms. In elongated form, the contact body extends across the socket portion.

The features according to the invention gives the advantages of:
- easier achieving satisfactory contact between the main parts of the runner;
- reduce the relative area of contact that need accurate tolerances; and
- simplify the verification of correct relative form of the contact areas.

In the following are described examples of preferred embodiments illustrated in the accompanying drawings, wherein:
- Fig. 1: shows in a perspective view a runner according to the invention that is upside down relative its normal working orientation;
- Fig. 2: shows to a larger scale a section of the runner in fig. 1 in a partly exploded view;
- Fig. 3: shows a section through an interface between a runner hub and a blade in a first embodiment;
- Fig. 4: shows the same as in fig. 3, but in another embodiment;
- Fig. 5: shows the same as in fig. 3, but in yet another embodiment;
- Fig. 6: shows the same as in fig. 3, but in yet another embodiment;
- Fig. 7: shows a plane view of a portion of the blade in fig. 6;
- Fig. 8: shows to a larger scale a section of a partly exploded runner having an interface connection according to fig. 4;
- Fig. 9: shows the same as in fig. 3, but in yet another embodiment; and
- Fig. 10: shows a cross section IX-IX in fig. 9.

On the drawings, the reference numeral 1 denotes a runner that includes a runner hub 2, a runner ring 4 and a number of blades 6 there between. The runner 1 has a central bore 8 for a shaft not shown.

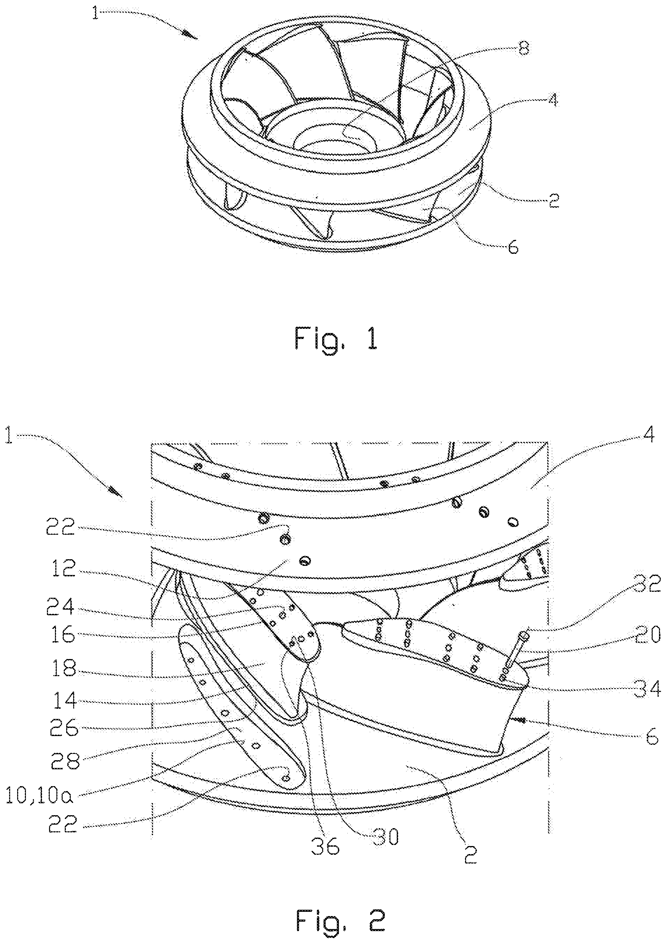

In this preferred embodiment each blade 6 is, mainly for stability and erosion reasons, positioned in a first grove 10 in the runner hub 2, respective a second groove 12 in the runner ring 4 as shown in fig. 2.

A double curved first socket portion 14 of the blade 6 fits the first groove 10 and a double curved second socket portion 16 fits the second grove 12. The first and second socket portions 14, 16 have, again mainly for stability reasons, a greater width 15 than a thickness 17 of an intermediate portion 18 of the blade 6.

A number of fixing elements 20, here in the form of bolts, extends through bores 22 in the runner hub 2 and the runner ring 4 and into fixing bores 24, here in the form of threaded bores, in the blades 6 when the blades 6 are fixed in the runner 1.

As the intermediate portion 18 of each blade 6 has a complex double curved form, so have also the first socket portion 14 and the second socket portion 16.

The surface area 28 in the bottom of the first grove 10 constitutes according to prior art a contact area for a corresponding surface area 26 of the first socket portion 14. This prior art feature is for illustrative purposes shown as the first grove 10, here termed 10a, in the left part of fig. 2. The surface areas 26, 28 have a complex double curved form and the corresponding surface area 28 has to closely match the form of the surface area 26. Specialized skills, machinery and test equipment are required to achieve a satisfactory accuracy between the surface areas 26, 28.

The invention discloses a number of localized, relatively small, plane contact surfaces 30 that are provided between the runner hub 2 and the blade 6, and the runner ring 4 and the blade 6 respectively.

Preferably, the plane of each contact surface 30 is perpendicular to the length axis 32 of the closest fixing element 20.

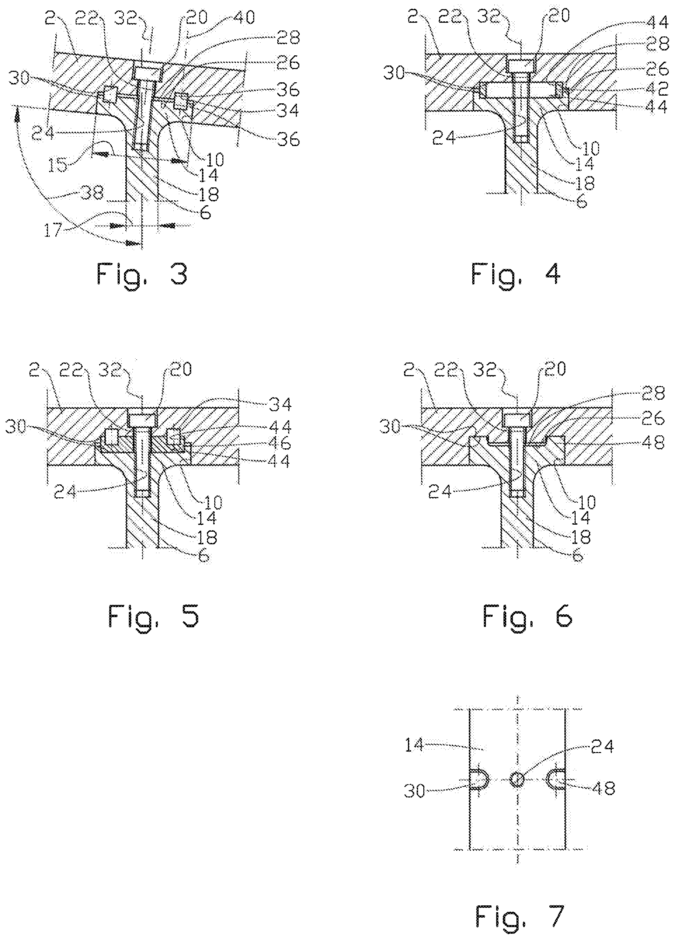

As shown in the middle and right blades 6 in fig. 2 as well as in fig. 3, two contact bodies 34, here cylindrical in form, are positioned at opposite sides of the fixing bores 24 for the fixing element 20. The plane contact surfaces 30 are here at the bottom of bored recesses 36 in the runner hub 2 and blade 6 respectively.

The length of the contact bodies 34 are adapted to the distance between the plane contact surfaces 30, and may be equal for all contact bodies 34 of a blade.

An angle 38 between the runner hub 2 and the blade 6 may vary along the length of the blade 6. The direction of the length axis 32 of the fixing element 20 relative the runner hub 2 may thus also vary.

In the figures the length axis 40 of the cylindrical contact bodies 34 are parallel to the length axis of the fixing element 20 when in its active position. This feature enables the fixing element 20 to sustain substantially axial forces only.

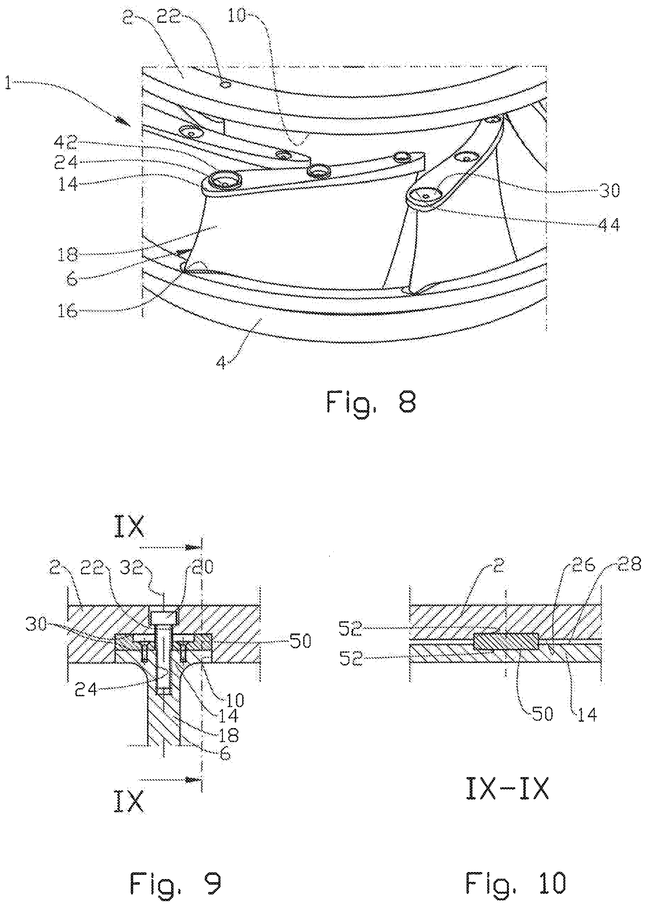

In another embodiment shown in figs. 4 and 8, a contact body 34, has the form of a contact ring 42 that is surrounding the fixing element 20, and is positioned in recesses 44 in the runner hub 2 and the blade 6. The contact ring 42 bears against the contact surfaces 30. It should be noted that the runner 1 in fig. 8 is shown in its usual working orientation.

In an embodiment shown in fig. 5, a contact body 34 in the form of circular contact disc 46 that encircles the fixing element 20 is positioned in the recesses 44. In this embodiment, additional cylindrical contact bodies 34 are positioned between the runner hub 2 and the contact disc 46. The contact bodies 34 and contact disk 46 may be made from one piece of material.

Fig. 6 shows an embodiment where flat faced protrusions 48 of the blade 6 extend into recessed contact surfaces 30 in the runner hub 2. In this case, no separate contact bodies are required. A plane view of a part of the blade 6 with two protrusions 48 is shown in fig. 7.

An elongated contact body 50 is shown in fig. 9. The body 50 is positioned in slots 52 with contact surfaces 30 in the runner hub 2 and the blade 6.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Runner (1) for a fluid machine where the runner (1) includes a runner hub (2) and ring (4) and one or more curved blades (6), and where the blade (6) is removably fixed to the runner hub (2) and ring (4) by fixing elements (20) that extend into a double curved first socket portion (14) of the blade (6), wherein the first socket portion (14) bears against the runner hub (2) and the ring (4) at one or more localized contact surfaces (30) that are plane; and in that a contact body (34), which may be a separate body or form a part of the runner hub (2) and ring (4) or blade (6), is positioned between one or more contact surfaces (30) in the runner hub (2) and the blade (6) and between one or more contact surfaces (30) in the ring (4) and blade (6).

2. The runner (1) according to claim 1, wherein the contact surfaces (30), at least in the runner hub (2) and ring (4) or the blade (6), are recessed.

3. The runner (1) according to claim 1 or 2, wherein the length axis (40) of the contact body (34) is parallel to the length axis (32) of the fixing element (20).

4. The runner (1) according to one or more of the preceding claims, wherein at least one socket portion (14, 16) has a width (15) that is wider than a thickness (17) of an intermediate portion (18) of the blade (6).

5. The runner (1) according to any of the claims 1-4, wherein the contact body (34) is cylindrical.

6. The runner (1) according to any of the claims 1-5, wherein the contact body (34) is a ring.

7. The runner (1) according to any of the claims 1-6, wherein the contact body (34) is a disc.

8. The runner (1) according to any of the claims 1-7, wherein an elongated contact body (34) extends across the socket portion (14, 16).

## Patentansprüche

1. Laufrad (1) für eine Strömungsmaschine, wobei das Laufrad (1) eine Laufradnabe (2) und einen Ring (4) aufweist, und einen oder mehrere gekrümmte Schaufelblätter (6), und wobei das Schaufelblatt (6) lösbar an der Laufradnabe (2) und am Ring (4) befestigt ist durch Befestigungselemente (20), welche sich in einen doppelt gekrümmten ersten Buchsenabschnitt (14) des Schaufelblattes (6) hinein erstrecken, wobei der erste Buchsenabschnitt (14) an einer oder mehreren lokalisierten Kontaktflächen (30), welche eben sind, gegen die Laufradnabe (2) und den Ring drückt; und dass ein Kontaktkörper (34), welcher ein separater Körper sein kann oder einen Teil der Laufradnabe (2) und des Rings (4) oder Schaufelblattes (6) bildet, zwischen einer oder mehreren Kontaktflächen (30) in der Laufradnabe (2) und dem Schaufelblatt (6) und zwischen einer oder mehreren Kontaktflächen (30) im Ring und Schaufelblatt (6) positioniert ist.

2. Laufrad (1) gemäss Anspruch 1, wobei die Kontaktflächen (30), mindestens in der Laufradnabe (2) und im Ring (4) oder im Schaufelblatt (6), versenkt sind.

3. Laufrad (1) gemäss Anspruch 1 oder 2, wobei die Längsachse (40) des Kontaktkörpers (34) parallel zur Längsachse (32) des Befestigungselements (20) ist.

4. Laufrad (1) gemäss einem oder mehrerer der vorhergehenden Ansprüche, wobei mindestens ein Buchsenabschnitt (14, 16) eine Breite (15) aufweist, welche breiter ist als eine Dicke (17) eines Zwischenabschnittes (18) des Schaufelblattes (6).

5. Laufrad (1) gemäss einem der Ansprüche 1-4, wobei der Kontaktkörper (34) zylindrisch ist.

6. Laufrad (1) gemäss einem der Ansprüche 1-5, wobei der Kontaktkörper (34) ein Ring ist.

7. Laufrad (1) gemäss einem der Ansprüche 1-6, wobei der Kontaktkörper (34) eine Scheibe ist.

8. Laufrad (1) gemäss einem der Ansprüche 1-7, wobei ein länglicher Kontaktkörper (34) sich über den Buchsenabschnitt (14, 16) erstreckt.

## Revendications

1. Une roue mobile (1) pour une machine à fluide où la roue mobile (1) comprend un moyeu de roue mobile (2) et un anneau (4) et une ou plusieurs pales (6) incurvées, et où la pale (6) est fixée de manière amovible au moyeu de roue mobile (2) et à l'anneau (4) par des éléments de fixation (20) qui s'étendent dans une première partie de douille (14) à double courbure de la pale (6), dans laquelle la première partie de douille (14) est en appui contre le moyeu (2) de roue mobile et l'anneau (4) au niveau d'une ou plusieurs surfaces de contact (30) localisées qui sont planes, et en ce qu'un corps de contact (34), qui peut être un corps séparé ou former une partie du moyeu de roue mobile (2) et l'anneau (4) ou de la pale (6), est positionné entre une ou plusieurs surfaces de contact (30) dans le moyeu de roue mobile (2) et la pale (6) et entre une ou plusieurs surfaces de contact (30) dans l'anneau (4) et la pale (6).

2. La roue mobile (1) selon la revendication 1, dans laquelle les surfaces de contact (30), au moins dans le moyeu de roue mobile (2) et l'anneau (4) ou dans la pale (6), sont en retrait.

3. La roue mobile (1) selon la revendication 1 ou 2, dans laquelle l'axe longitudinal (40) du corps de contact (34) est parallèle à l'axe longitudinal (32) de l'élément de fixation (20).

4. La roue mobile (1) selon une ou plusieurs des revendications précédentes, dans laquelle au moins une partie de douille (14,16) présente une largeur (15) qui est plus large qu'une épaisseur (17) d'une portion intermédiaire (18) de la pale.

5. La roue mobile (1) selon l'une quelconque des revendications 1 à 4, dans laquelle le corps de contact (34) est cylindrique.

6. La roue mobile (1) selon l'une quelconque des revendications 1 à 5, dans laquelle le corps de contact (34) est un anneau.

7. La roue mobile (1) selon l'une quelconque des revendications 1 à 6, dans laquelle le corps de contact (34) est un disque.

8. La roue mobile (1) selon l'une quelconque des revendications 1 à 7, dans laquelle un corps de contact allongé (34) s'étend à travers la partie de douille (14, 16).
